Europäisches Patentamt

European Patent Office

Office européen des brevets

(11) Veröffentlichungsnummer: **0 372 502**
**A2**

## (12) EUROPÄISCHE PATENTANMELDUNG

(21) Anmeldenummer: 89122439.6

(51) Int. Cl.5: **A23K 1/165**

(22) Anmeldetag: 05.12.89

Patentansprüche für folgenden Vertragsstaat: ES.

(30) Priorität: 07.12.88 DE 3841152

(43) Veröffentlichungstag der Anmeldung:
13.06.90 Patentblatt 90/24

(84) Benannte Vertragsstaaten:
AT BE CH DE ES FR GB GR IT LI LU NL SE

(71) Anmelder: HOECHST AKTIENGESELLSCHAFT
Postfach 80 03 20
D-6230 Frankfurt am Main 80(DE)

(72) Erfinder: Lotz, Andreas, Dr.
Parkstrasse 10
D-6233 Kelkheim (Taunus)(DE)
Erfinder: Pries, Hans-Dieter, Dr.
Stadionstrasse 12
D-8044 Unterschleissheim(DE)
Erfinder: Wöhner, Gerhard, Dr.
Mühlenkampstrasse 77
D-3050 Wunstorf(DE)
Erfinder: Scheuermann, Stefan Eugen, Dr.
Im Langzahl 23
D-6274 Hünstetten(DE)

(54) Verwendung von bakterienlysierendem Enzymprodukt und Protease als Zusatzstoff zur Verbesserung der Futterverwertung in der Tierproduktion.

(57) Es wurde gefunden, daß bakterienlysierende Enzymprodukte und Proteasen im Gemisch als Zusatzstoff zu Futtermitteln zugesetzt werden können, wodurch eine Verbesserung der Futterverwertung hervorgerufen wird, die sich in einem besseren Wachstum der Tiere äußert.

EP 0 372 502 A2

EP 0 372 502 A2

## Verwendung von bakterienlysierendem Enzymprodukt und Protease als Zusatzstoff zur Verbesserung der Futterverwertung in der Tierproduktion.

Die Verwendung von Zusatzstoffen im Tierfutter zur Verbesserung der Futterverwertung ist bekannt. Bei diesen Leistungsförderern handelt es sich vorwiegend um antibakteriell wirksame Substanzen, wie beispielsweise das Flavomycin®, ein Gemisch aus verschiedenen Phosphoglykolipid-Antibiotika, den Moenomycinen, dessen Verwendung als Futterzusatzstoff in dem Deutschen Patent 12 03 107 beschrieben wird.

Gemäß WO 8904-320 wird ein tierisches Lysozym mit Hilfe eines genetisch veränderten Mikroorganismus hergestellt. Ein derartiges Lysozym kann als Futterzusatzmittel für Wiederkäuer zur Verbesserung der Gewichtszunahme eingesetzt werden.

In SU 1397-019 wird ein Gemisch aus Lysozym und Zitronensäure bzw. Essigsäure als Wachstumsstimulator für Tiere beschrieben.

Es wurde nun überraschend gefunden, daß die Verwendung von bakterienlysierendem Enzymprodukt aus Streptomyces coelicolor DSM 3030 sowie dessen Mutanten und Varianten, die das Enzymprodukt ebenfalls produzieren, als Futterzusatzmittel vorteilhaft ist. Ebenso kann ein Gemisch aus bakterienlysierendem Enzymprodukt und Protease in Futtermitteln mit sehr guten Ergebnissen bei der Gewichtszunahme und der Futterverwertung von Tieren verwendet werden.

Die Erfindung betrifft somit:

1. Die Verwendung von bakterienlysierendem Enzymprodukt aus Streptomyces coelicolor DSM 3030 sowie dessen Mutanten und Varianten als Zusatzstoff zu Tierfutter.

2. Die Verwendung eines Gemisches von bakterienlysierendem Enzymprodukt mit N-Acetylmuramidase Aktivität und Protease als Zusatzstoff zu Tierfutter.

3. Futtermittel, das das unter 1. bzw. 2. charaktierisierte Produkt als Zusatzstoff enthält.

Im folgenden wird die Erfindung detailliert erläutert, insbesondere in ihren bevorzugten Ausführungsformen. Ferner wird die Erfindung durch den Inhalt der Ansprüche definiert.

Das Enzymprodukt mit N-Acetylmuramidase-Aktivität aus DSM 3030 kann sowohl in reiner Form oder auch mit anderen Stoffen versetzt. beispielweise mit Fermentationsrückständen oder Proteinen, eingesetzt werden. Die Gewinnung dieses Enzymprodukts aus Streptomyces coelicolor DSM 3030 sowie dessen Charakterisierung ist ausführlich in der Deutschen Offenlegungsschrift 34 40 735 beschrieben.

Streptomyces coelicolor DSM 3030 wird beispielsweise in einem Nährmedium gezüchtet, das Zuckerrübenmelasse in einer Menge von 5 bis 50 g, vorzugsweise 10 bis 20 g, pro Liter Kulturmedium enthält. Wenn dem Medium Calciumionen in Form leicht löslicher, ungiftiger Calciumsalze zugegeben werden, so kann die Ausbeute weiter gesteigert werden. Vorteilhaft ist eine 0,05 bis 1 molare Calciumkonzentration.

Das Enzymprodukt wird in das Kulturmedium ausgeschieden. Das Enzym mit N-Acetylmuranidaseaktivität kann nach an sich bekannten Methoden aus diesem Medium, beispielsweise durch Fällung oder Extraktion, aufgereinigt gewonnen werden. Es ist jedoch nicht unbedingt notwendig, den Fermentationsüberstand zur Gewinnung des bakterienlysierenden Enzymprodukts aufzuarbeiten, sondern es ist ausreichend, ihn als getrocknetes Produkt direkt dem Futter zuzusetzen. Die Trocknung des Fermentationsüberstands erfolgt bevorzugt durch Sprühtrocknung.

Ein derartig hergestelltes bakterienlysierendes Enzymprodukt ist jedoch mit Proteasen vergesellschaftet. Um das reine Enzymprodukt zu erhalten, kann eine Reinigung mit Hilfe der Ionenaustauscher-Chromatographie an schwach sauren, makroporösen Kationenaustauschern erfolgen. Ein entsprechendes Verfahren ist in der Europäischen Patentanmeldung 280 032 beschrieben.

Das erhaltene bakterienlysierende Enzymprodukt ist in Bezug auf seine lytische Aktivität in einem pH-Bereich von unter 3 bis 9 stabil und wirksam. Nach 16 Stunden Inkubation bei Raumtemperatur in Puffergemischen war die maximale Aktivität im Bereich von pH 3 bis 9 noch zu mindestens 80 % erhalten.

Das Temperatur-Ooptimum für die Aktivität des bakterienlysierenden Enzymprodukts liegt im Bereich von 50 bis 60° C. Über diesen Bereich werden mindestens 90 % der maximalen Aktivität erreicht. Von niedrigen Temperaturen ausgehend steigt die Aktivität mit steigender Temperatur bis 60° C langsam an: bei Zimmertemperatur sind es etwa 10 %, bei 30° C etwa 30 %, bei 40° C etwa 60 % der maximalen Aktivität. Bei höheren Temperaturen fällt die Aktivität rasch ab: bei 65° C sind es noch etwa 30 %, bei 70° C 10 % der maximalen Aktivität.

Es kann auch ein bakterienlysierendes Enzymprodukt im Gemisch mit Proteasen eingesetzt werden. Dabei kann grundsätzlich jedes bakterienlysierende Enzymprodukt mit N-Acetylmuramidase-Aktivität erfindungsgemäß Anwendung finden. Ein derartiges Enzymprodukt besteht hauptsächlich aus einem oder mehreren Enzymen mit N-Acetylmuramidase- Aktivität, wobei diese Enzyme jedoch durchaus auch mit anderen Stoffen, beispielsweise Fermentationsrückständen, versetzt sein können. Das Enzymprodukt kann aus pflanzlichem oder tierischem Gewebe gewonnen werden oder von mikrobiellem Ursprung sein. Besonders geeignet ist ein aus Streptomyces coelicolor DSM 3030 sowie ein aus dessen Varianten und Mutanten gewonnenes bakterienlysierendes Enzymprodukt. Bei den Proteasen handelt es sich vor allem um trypsin- bzw. chymotrypsinähnliche Enzyme. Die Verwendung des proteasehaltigen Enzymgemisches ist von Vorteil, da mit diesen Produkten bessere Ergebnisse bei der Futterverwertung erzielt werden. Das Verhältnis bakterienlysierendes Enzymprodukt zu Protease sollte im Bereich von 1:1 bis 1000:1, vorteilhaft im Bereich von 100:1 bis 500:1, bezogen auf die Enzymaktivität, liegen.

Das bakterienlysierende Enzymprodukt von DSM 3030 sowie das soeben beschriebene Enzymgemisch kann grundsätzlich allen Futtermitteln zugegeben werden. Bevorzugt geeignet sind beispielsweise solche, die mit den Vorschriften der Futtermittelgesetzgebung übereinstimmen, wie Alleinfutter, Ergänzungsfutter und Mineralfutter.

Das bakterienlysierende Enzymprodukt kann im Bereich von 0,1 bis 100.000 ppm zudosiert werden, vorzugsweise im Bereich von I bis 1000 ppm. Die lytische Aktivität von bakterienlysierendem Enzymprodukt wird üblicherweise in Units (U) angegeben. Die Messung der N-Acetylmuramidase-Aktivität erfolgt wie in der Deutschen Offenlegungsschrift 34 40 735 beschrieben. Sie soll im Futter zweckmäßig zwischen 0,1 und 100 U/mg Futter liegen, vorzugsweise zwischen 0,5 und 50 U/mg.

Das Enzymprodukt einzeln oder im Gemisch wird dem Futter in entsprechenden Gewichtsverhältnissen chargenweise untergemischt. Wichtig ist hierbei eine gleichmäßige Verteilung der Wirkstoffe im Futter.

Futtermittel, die bakterienlysierendes Enzymprodukt aus DSM 3030 bzw. das Gemisch aus bakterienlysierendem Enzymprodukt und Protease enthalten, können zur Fütterung sämtlicher Tiere, besonders vorteilhaft aber zur Fütterung landwirtschaftlicher Nutztiere zur Nahrungsmittelproduktion, insbesondere Broiler, Puten, Schweine und Rinder, eingesetzt werden.

Die Zugabe des bakterienlysierenden Enzymprodukts oder des Gemisches zu den Futtermitteln bewirkt deren wesentlich bessere Verwertung und damit verbunden ein besseres Wachstum der Tiere. Ihre Verwendung als Zusatzstoff zu Futtermitteln hat, im Vergleich zu den antibiotisch wirkenden Zusatzstoffen, den großen Vorteil, daß bei Anwendung über einen längeren Zeitraum die Gefahr einer Resistenzbildung nicht vorhanden ist.

Im folgenden soll die Erfindung anhand von Beispielen weitergehend erläutert werden.

**Beispiel 1:**

Kultivierung von S. coelicolor DSM 3030

Schrägboden-Agarmedium, welches 2 % Sojamehl, 2 % Mannit und 1,5 % Agar (pH 7,5) enthielt, wurde mit Streptomyces coelicolor DSM 3030 beimpft und 10 Tage bei 30°C kultiviert. Die Schrägkultur wurde mit 10 ml einer sterilen Lösung von 0,9 % NaCl und 0,01 % eines nichtionischen Tensids versetzt und die Sporen abgeschwemmt. 0,2 ml der Sporensuspension wurden als Impfmaterial für Schüttelkulturen von 100 ml Kulturmedium in 300 ml fassenden Kulturkolben verwendet.

Die in Tabelle 1 aufgeführten Kulturmedien Nr. 1-3 wurden angesetzt, beimpft und bei 30°C und einer Frequenz von 160 Upm geschüttelt. Nach 2, 4 und 6 Tagen wurden Proben entnommen, die Zellen abzentrifugiert und die Aktivität des bakterienlysierenden Enzymprodukts im Kulturüberstand bestimmt (Tabelle 2).

Die höchsten Ausbeuten an bakterienlysierendem Enzymprodukt wurden mit der Nährlösung 3 erhalten, die neben Glucose, Sojamehl und Caseinpepton 2 % Zuckerrübenmelasse enthielt.

EP 0 372 502 A2

Tabelle 1:

| Kulturmedien | | | |
|---|---|---|---|
| | Medium Nr. | | |
| % | 1 | 2 | 3 |
| Glucose | 2 | | 1 |
| Mannit | | 2 | |
| Sojamehl | 2 | 1 | 0,5 |
| Caseinpepton | | | 0,5 |
| Melasse | | 1 | 2 |

Tabelle 2:

| Aktivität an bakterienlysierendem Enzymprodukt im Kulturüberstand (U/ml) | | | |
|---|---|---|---|
| Fermentationszeit | Medium Nr. | | |
| Tage | 1 | 2 | 3 |
| 2 | 21 | 15 | 363 |
| 4 | 367 | 378 | 1106 |
| 6 | 236 | 558 | 2088 |

**Beispiel 2:**

Ausbeuteerhöhung durch Calciumzusatz

Streptomyces coelicolor DSM 3030 wurde in der in Beispiel 1 beschriebenen Weise auf einem Nährboden, der 1 % Glucose, 2 % Melasse, 0,5 % Sojamehl, 0,5 % Caseinpepton und 0,5 % CaCl₂ x 2H₂O enthielt, kultiviert. Durch den Zusatz von CaCl₂ wurde eine wesentliche Erhöhung der Ausbeute an bakterienlysierendem Enzymprodukt im Kulturüberstand nach 2, 4 und 6 Tagen von 768 U/ml, 2462 U/ml und 4715 U/ml erhalten.

**Beispiel 3:**

a) Aktivitätsbestimmung von bakterienlysierendem Enzymprodukt:

Zu 2,8 ml einer Suspension von 0,2 mg Micrococcus luteus ATCC 4698 (Boehringer Mannheim) pro ml 0,1 M Natriumacetatpuffer (pH 5,0) werden 0,2 ml bakterienlysierendes Enzymprodukt-haltige Proben pipettiert und bei 25 °C die Abnahme der Trübung durch Messung der Extinktion bei 450 nm bestimmt. Als 1 U wird die Extinktionsabnahme von 0,001 Photometer-Skalaeinheiten pro Minute definiert.

b) Aktivitätsbestimmung von Protease mit Azocasein:

Ausgangsmaterial:
Puffer 0,1 M Na-phosphatpuffer (pH 7,0)

4

Azocaseinlösung: 250 mg Azocasein + 10 ml Puffer - rühren bis sich kein Azocasein mehr löst; nicht gelöstes Azocasein abzentrifugieren und den Überstand für den Test einsetzen.

Durchführung:

in 15 ml Glaszentrifugenröhrchen pipettieren

| Probe | Leerwert |
|---|---|
| - 2 ml Probe | - 2 ml Probe<br>- 0,5 ml Puffer zugeben |

- bei + 40°C im Wasserbad 5 min. vorwärmen
+ 0,5 ml Azocas.-lsg (40°C) zugeben
- mischen
- 30 min. Inkubation + 40°C im Wasserbad
+ 0,2 ml Perchlorsäure 70 %ig zugeben (Raktionsstop)
- mischen
- 5 min. bei Raumtemperatur stehen lassen
- ausgefälltes Casein abzentrifugieren
- photometrische Bestimmung der Überstände ($E_{440}$)

O-Wert an Stelle der Probe wird Puffer in den Test eingesetzt

Der O-Wert sollte ($E_{440}$) 0,050-0,060 betragen.

## Berechnung:

$$1U_{AZOc.}/ml \triangleq \frac{\Delta E\ 0,001}{min} \triangleq \frac{(\Delta E - O\text{-}Wert)\ x\ 1000}{30}\ x\ Verdünnung$$

**Beispiel 4:**

6 Monate-Versuch mit Mastbullen

In einem 6-Monate-Versuch mit Mastbullen erhielten Gruppen von je 9 Tieren Dosierungen von 100 ppm bzw. 200 ppm Enzymprodukt pro Tier und Tag (erhalten durch Trocknung des Kultivierungsüberstandes nach Abtrennung der Zellen von Streptomyces coelicolor DSM 3030) pro kg Ergänzungsfutter, was einer Enzymgemisch-Dosierung von durchschnittlich 326 mg bzw. 454 mg pro Tier und Tag entspricht. Neben der präparatbedingten Verbesserung des Wachstums und der Futterverwertung ergaben sich bei den behandelten Tieren keine auffälligen Befunde.

**Beispiel 5:**

Versuch mit Ratten

Ratten im Gewichtsabschnitt 65-180 kg Lebendmasse erhielten ein standardisiertes Rattenfutter (Altromin Nr. 3121 Altromin International, Lage/Lippe, BRDeutschland), das dem Bedarf wachsender Ratten angepaßt war. Pro Behandlung wurden 6 Tieren eingesetzt und auf die Gruppen "Kontrolle" (ohne Zusätze), Testgruppe I (19 U Lysozym/mg Futter) und Testgruppe II (38 U Lysozym/mg Futter) verteilt. Die Tiere wurden einzeln in Stoffwechselkäfigen gehalten.

Die Futteraufnahme wurde täglich, das Gewicht wöchentlich jeweils pro Tier registriert. Einer l4-tägigen Fütterungsphase folgte eine 7-tägige Stickstoffbilanzperiode mit einer quantitativen Sammlung von Kot und Harn.

Aus der Differenz zwischen der Aufnahme an Stickstoff über das Futter und den Stickstoffausscheidungen über Kot und Harn wurde die Stickstoffretention als Maß für den Proteinansatz berechnet.

Ergebnis (Tabelle 1)

Die Gewichtsentwicklung der Testgruppe I und II war um 4,2 bzw. 3,1 % erhöht, und der Futterverbrauch um durchschnittlich 3,3 % vermindert. Die Stickstoffretention war um durchschnittlich 28,5 bzw. 25,2 % verbessert.

**Beispiel 6:**

Versuch mit Ferkeln

Ferkel im Gewichtsabschnitt 15-25 kg Lebendmasse erhielten eine Futtermischung auf Getreide-, Soja- und Fischmehlbasis, die bedarfsgerecht mit Vitaminen, Spuren- und Mengenelementen ergänzt war (Tab. 3). Die Kontrollgruppe (n = 10) bzw. Testgruppe (n = 7) erhielt das Futter ohne bzw. mit einem Zusatz von 10 U Lysozym-Aktivität/mg Futter.

Die Futteraufnahme wurde pro Mahlzeit (2/Tag) und die Gewichtsentwicklung wöchentlich registriert. Die täglichen Zunahmen (g/d) und der Futteraufwand (kg Futter/kg Zuwachs) wurden am Ende des Versuchs berechnet.

Ergebnis (Tabelle 2)

Die Gewichtsentwicklung wurde durch den Zusatz um durchschnittlich 4,7 % verbessert und der Futteraufwand um durchschnittlich 8,5 % reduziert.

**Tabelle 1**

Wirkung von Lysozym/Protease - Kombination bei Ratten

| Gruppe | Aktivität | | tägl. | Futterverwertung | Stickstoffretention |
|---|---|---|---|---|---|
| | Lysozym | Protease | Zunahmen | | |
| | U / mg Futter (Feed) | | g/d | | g/d |
| Kontrolle | | | 5,46 | 3,04 | 0,151 |
| | | | ± 0,16 | ± 0,09 | ± 0,010 |
| | | | 100,0 | 100,0 | 100,0 |
| I | 19 | 0,04 | 5,69 | 2,94 | 0,194 |
| | | | ± 0,18 | ± 0,12 | ± 0,016 |
| | | | 104,2 | 96,7 | 128,5 |
| II | 38 | 0,08 | 5,63 | 2,94 | 0,189 |
| | | | ± 0,13 | ± 0,09 | ± 0,008 |
| | | | 103,1 | 96,7 | 125,2 |
| p* | | ≤ | 0,05 | 0,05 | 0,001 |

* Irrtumswahrscheinlichkeit

EP 0 372 502 A2

**Tabelle 2**

**Wirkung von Lysozym/Protease - Kombination bei Ferkeln**

| Aktivität | | tägl. | Futterverwertung |
|---|---|---|---|
| Lysozym | Protease | Zunahmen | |
| U / mg Futter (Feed) | | g/d | |
| Kontrolle | | 400,7 | 1,89 |
| | | ± 77,3 | ± 0,30 |
| | | 100,0 | 100,0 |
| 10 | $6,7 \cdot 10^{-5}$ | 419,5 | 1,73 |
| | | ± 61,2 | ± 0,20 |
| | | 104,7 | 91,5 |

**Tabelle 3**

**Futterzusammensetzung in %**

| | |
|---|---|
| Gerste | 20,0 |
| Weizen | 10,0 |
| Hafer | 6,0 |
| Mais | 25,2 |
| Leinkuchen | 5,5 |
| Luzernegrünmehl | 4,0 |
| Sojaextraktionsschrot | 18,0 |
| Fischmehl | 4,0 |
| Weizenkleie | 5,0 |
| Vitamine und Mineralstoffmischung | 2,3 |

**Ansprüche**

1. Verwendung von bakterienlysierendem Enzymprodukt aus Streptomyces coelicolor DSM 3030 sowie dessen Mutanten und Varianten als Zusatzstoff zu Tierfutter.

2. Verwendung eines Gemisches aus von bakterienlysierendem Enzymprodukt mit N-Acetylmuramidaseaktivität und Protease als Zusatzstoff zu Tierfutter.

3. Verwendung nach Anspruch 2, dadurch gekennzeichnet, daß das bakterienlysierende Enzymprodukt von Streptomyces coelicolor DSM 3030, dessen Varianten oder Mutanten eingesetzt wird.

4. Verwendung nach Anspruch 2, dadurch gekennzeichnet, daß das bakterienlysierende Enzymprodukt in Form des getrockneten Nährmediums eingesetzt wird.

5. Verwendung nach einem oder mehreren der Ansprüche 1 bis 4, dadurch gekennzeichnet, daß das bakterienlysierende Enzymprodukt mit einer N-Acetylmuramidase-Aktivität von 0,1 bis 100 U/mg Futtermittel in diesem enthalten ist.

6. Verwendung nach Anspruch 5, dadurch gekennzeichnet, daß die Aktivität 0,5 bis 50 U/mg beträgt.

7. Verwendung nach einem cder mehreren der Ansprüche 2 bis 6, dadurch gekennzeichnet, daß das Verhältnis bakterienlysierendes Enzymprodukt zu Protease im Bereich 1:1 bis 1000:1, bezogen auf die Enzymaktivität, liegt.

8. Verwendung nach Anspruch 7, dadurch gekennzeichnet, daß das Verhältnis im Bereich 100:1 bis 500:1 liegt.

9. Futtermittel, dadurch gekennzeichnet, daß es ein bakterienlysierendes Enzymprodukt aus Streptomyces coelicolor DSM 3030 als Zusatzstoff enthält.

10. Futtermittel, dadurch gekennzeichnet, daß es ein bakterienlysierendes Enzymprodukt mit N-Acetylmuramidase-Aktivität und Protease als Zusatzstoff enthält.

Claims for the following Contracting State: ES

1. Verwendung von bakterienlysierendem Enzymprodukt aus Streptomyces coelicolor DSM 3030 sowie dessen Mutanten und Varianten als Zusatzstoff zu Tierfutter.

2. Verwendung eines Gemisches aus von bakterienlysierendem Enzymprodukt mit N-Acetylmuramidaseaktivität und Protease als Zusatzstoff zu Tierfutter.

3. Verwendung nach Anspruch 2, dadurch gekennzeichnet, daß das bakterienlysierende Enzymprodukt von Streptomyces coelicolor DSM 3030, dessen Varianten oder Mutanten eingesetzt wird.

4. Verwendung nach Anspruch 2, dadurch gekennzeichnet, daß das bakterienlysierende Enzymprodukt in Form des getrockneten Nährmediums eingesetzt wird.

5. Verwendung nach einem oder mehreren der Ansprüche 1 bis 4, dadurch gekennzeichnet, daß das bakterienlysierende Enzymprodukt mit einer N-Acetylmuramidase-Aktivität von 0,1 bis 1000 U/mg Futtermittel in diesem enthalten ist.

6. Verwendung nach Anspruch 5, dadurch gekennzeichnet, daß die Aktivität 0,5 bis 5 U/mg beträgt.

7. Verwendung nach einem oder mehreren der Ansprüche 2 bis 6, dadurch gekennzeichnet, daß das Verhältnis bakterienlysierendes Enzymprodukt zu Protease im Bereich 1:1 bis 1000:1, bezogen auf die Enzymaktivität, liegt.

8. Verwendung nach Anspruch 7, dadurch gekennzeichnet, daß das Verhältnis im Bereich 100:1 bis 500:1 liegt.